# FASCICULE DE BREVET EUROPEEN

(11) **EP 1 111 259 B1**
(45) Date de publication et mention de la délivrance du brevet: **30.05.2007**
(21) Numéro de dépôt: 00127889.4
(22) Date de dépôt: 20.12.2000
(51) Int. Cl.: F16D 3/04, B60K 37/06, F16D 3/00

(54) **Dispositif d'accouplement entre un organe rotatif menant et un organe rotatif mené**
Kupplungsvorrichtung zum Übertragen einer Drehbewegung zwischen einem treibenden und einem getriebenen Glied
Coupling device between a rotating driving member and a rotating driven member

(30) Priorité: 22.12.1999 FR 9916261
(43) Date de publication de la demande: 27.06.2001
(73) Titulaire: Valeo Systèmes Thermiques, 78321 Le Mesnil St Denis Cedex (FR)
(72) Inventeur: Korzeniewski, Ulrich, 94700 Maisons Alfort (FR); Bombard Stéphane, 94500 Champigny S/Marne (FR); Guilbault, Gaetan, 77270 Villeparisis (FR)
(74) Mandataire: Léveillé, Christophe

(56) Documents cités:
- EP-A- 0 101 796
- DE-A- 3 324 008
- DE-A- 3 829 568
- DE-A- 4 211 619
- FR-A- 2 682 728
- FR-A- 2 784 148
- US-A- 3 405 539
- US-A- 3 618 339
- US-A- 3 832 908
- US-A- 4 197 765

## Description

L'invention concerne un dispositif d'accouplement entre un organe rotatif menant et un organe rotatif mené ayant des axes respectifs sensiblement alignés.

Un dispositif d'accouplement de ce type peut être utilisé par exemple pour assurer une liaison en rotation entre un bouton de commande et un mécanisme commandé par ce bouton de commande.

Dans une application préférentielle de l'invention, le bouton de commande est centré dans une façade d'un tableau de commande, tandis que le mécanisme commandé par le bouton de commande fait partie d'une carte électronique ou d'une platine surmoulée intégrant des pistes de puissance. Le dispositif d'accouplement peut être utilisé notamment pour assurer un accouplement entre un bouton de commande associé à un tableau de commande d'un véhicule automobile pour commander un mécanisme tel que, par exemple, un potentiomètre ou un commutateur électrique monté sur une carte électronique n'ayant pas de liaison avec la façade du tableau de commande.

Les tableaux de commande de ce type comprennent habituellement une façade portant plusieurs boutons rotatifs dont les axes respectifs sont destinés à entraîner des mécanismes rotatifs placés en arrière de la façade.

Dans de tels tableaux de commande, se pose le problème d'assurer une coïncidence exacte de l'axe de chaque bouton de commande avec l'axe d'entrée du mécanisme commandé correspondant, lors du montage du tableau de commande.

Ce problème est d'autant plus difficile à résoudre que le tableau de commande comprend plusieurs boutons et donc plusieurs mécanismes commandés et que l'entre-axe entre les boutons les plus éloignés est important.

En effet, il existe nécessairement des tolérances de fabrication et de montage qui font qu'il est pratiquement impossible d'assurer une coïncidence parfaite entre les axes respectifs des boutons et les axes d'entrée des mécanismes correspondants.

Pour cela, il est nécessaire de prévoir à chaque fois un mécanisme de rattrapage de jeu pour compenser les écarts qui se produisent. Il s'agit de rattraper la non-coaxialité résultant du fait que les deux axes sont parallèles avec une distance non-nulle et/ou que les deux axes sont non-parallèles.

Il est connu pour cela d'utiliser des joints du type "joints de Oldham", qui comportent deux glissières orthogonales permettant d'effectuer un rattrapage de jeu ou des dispositifs tels que décrits dans le brevet US 3618339.

Cependant, ces joints connus nécessitent plusieurs pièces, qui occupent de l'espace et en outre requièrent un graissage. L'invention a notamment pour but de surmonter les inconvénients précités.

Elle vise en particulier à procurer un dispositif d'accouplement entre un organe rotatif menant et un organe rotatif mené qui peut être réalisé facilement et à moindre coût, qui soit en outre d'un faible encombrement et ne nécessite pas de graissage.

L'invention propose à cet effet un dispositif d'accouplement du type défini en introduction, comprenant les caractéristiques des revendications indépendantes 1 ou 2.

Ainsi, le dispositif d'accouplement de l'invention se compose de deux leviers solidaires des axes respectifs de l'organe rotatif menant et de l'organe rotatif mené, et d'une charnière souple reliant les deux leviers.

Ce dispositif peut être facilement réalisé, génère un minimum d'encombrement, et ne nécessite pas de graissage.

Les revendications dépendantes 3 à 11 illustrent des formes de réalisation préférées de l'invention.

Dans la description qui suit, faite seulement à titre d'exemple, on se réfère aux dessins annexés, sur lesquels :
- la figure 1 est une vue schématique en perspective d'un dispositif d'accouplement selon une première forme de réalisation de l'invention ;
- la figure 2 est une vue schématique en perspective d'un dispositif d'accouplement selon une deuxième forme de réalisation de l'invention ;
- la figure 3 est une vue en perspective éclatée d'un bouton rotatif centré sur un tableau de commande et relié à un mécanisme rotatif d'une carte électronique par l'intermédiaire d'un dispositif d'accouplement selon l'invention
- la figure 4 est une vue arrière du tableau de commande de la figure 3 ;
- la figure 5 est une vue en coupe selon la ligne V-V de la figure 4 ; et
- la figure 6 est une vue en coupe selon la ligne VI-VI de la figure 5.

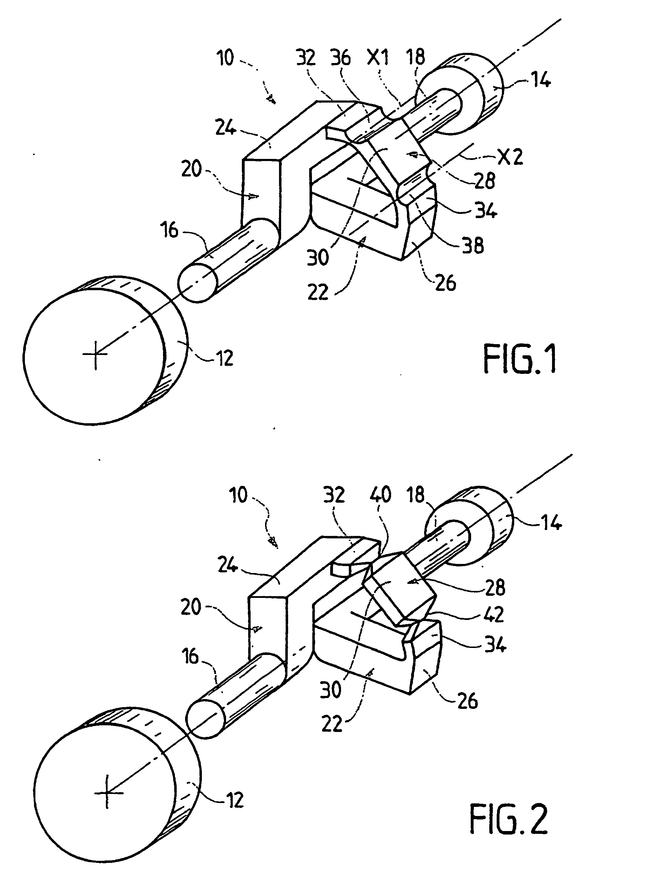

On se réfère d'abord à la figure 1 qui montre un dispositif d'accouplement 10 selon l'invention, interposé entre un organe rotatif menant 12 et un organe rotatif mené 14, lesquels sont solidaires en rotation d'axes respectifs 16 et 18 sensiblement alignés.

Dans une application de l'invention, l'organe rotatif menant 12 est un bouton de commande, tandis que l'organe rotatif mené 14 est un mécanisme commandé, par exemple un potentiomètre, un commutateur électrique, etc. Le bouton de commande 12 est habituellement centré sur une façade d'un tableau de commande (non représenté) tandis que l'organe rotatif mené 14 est placé en arrière de la façade.

Lors du montage d'un tableau de commande de ce type, il existe nécessairement des dispersions dues à des tolérances de fabrication ou de montage, qui font qu'il est impossible de réaliser une coïncidence parfaite entre les axes géométriques correspondants aux axes 16 et 18, si bien qu'il est nécessaire de prévoir un mécanisme de rattrapage.

Le dispositif d'accouplement 10 permet de réaliser un tel rattrapage. Il comprend un premier levier 20 solidaire de l'axe 16 de l'organe rotatif menant 12 et un second levier 22 solidaire de l'axe 18 de l'organe rotatif mené 14. Les leviers 20 et 22 s'étendent radialement par rapport aux axes respectifs 16 et 18 et ils comprennent des extrémités respectives 24 et 26 chacune éloignée de l'axe correspondant.

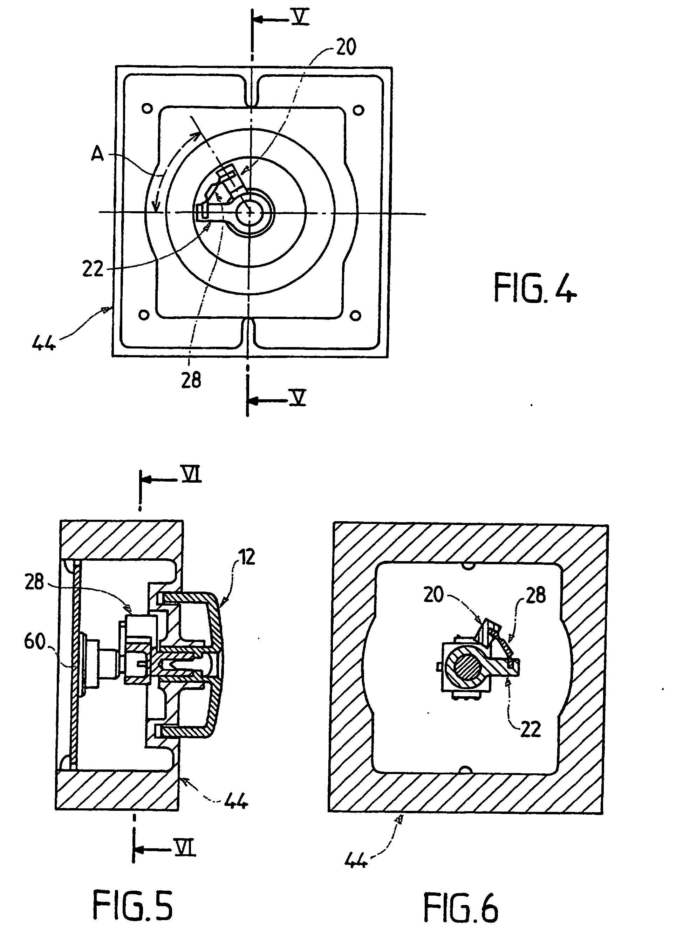

Comme on peut le voir sur la figure 1, les leviers 20 et 22 sont espacés dans la direction axiale, tout en étant proches l'un de l'autre et ils présentent un décalage angulaire A qui, dans l'exemple de la figure 4, est voisin de 60°.

Ces deux leviers 20 et 22 sont réunis par une charnière souple 28 qui présente une forme s'approchant de celle d'un arc de cercle.

Dans l'exemple, la charnière souple 28 comprend une partie centrale 30 reliée à deux parties extrêmes 32 et 34 par l'intermédiaire de deux régions déformables 36 et 38. Les parties extrêmes 32 et 34 sont rattachées respectivement aux extrémités 24 et 26 des leviers 20 et 22.

Les deux leviers 20 et 22 ainsi que la charnière souple 28 sont, dans l'exemple, formés d'une seule pièce par moulage d'une matière plastique semi-rigide.

La charnière souple 28 est réalisée sous la forme d'une bande de section rectangulaire, sensiblement constante, et les deux régions déformables 36 et 38 sont formées par des amincissements localisés de la bande. Ces deux régions déformables 36 et 38 définissent deux axes d'articulation X1 et X2 qui sont sensiblement parallèles entre eux et parallèles aux axes 16 et 18.

On comprendra que lorsque l'organe rotatif menant 12 est entraîné en rotation, dans un sens ou dans l'autre, autour de son axe, il entraîne en rotation l'organe rotatif mené 14 autour de son axe 18, du fait de la liaison articulée formée par le dispositif d'accouplement 10.

Les régions déformables 36 et 38 sont obtenues chacune par un amincissement formant une gorge en U, si bien que l'épaisseur de la bande est minimale dans la zone proche du fond de la gorge pour faciliter la déformation.

Il est à noter que la charnière souple 28 constitue un élément de liaison que l'on peut qualifier de souple ou de semi rigide dans la mesure où il permet de réaliser une transmission de mouvement entre l'organe menant et l'organe mené avec un rattrapage de jeu du au désaxage, même minime, des axes 16 et 18.

Dans la forme de réalisation de la figure 2, le dispositif d'accouplement 10 est analogue à celui de la figure 1, sauf en ce qui concerne la réalisation des régions déformables. En effet, la partie centrale 30 est ici reliée aux parties extrêmes 32, 34 par l'intermédiaire de deux régions déformables 40 et 42 qui sont agencées pour définir deux liaisons à rotules. Dans l'exemple, ces deux régions déformables ont la forme chacune de deux troncs de pyramides à base rectangulaire opposées par le sommet.

Il en résulte que, dans le dispositif d'accouplement de la figure 10, la partie centrale 30 peut se déplacer par rapport aux parties extrêmes 32 et 34 par des liaisons du type rotule, et non par des liaisons du type charnière, ce qui permet d'offrir des degrés de liberté supplémentaires.

Ainsi, le dispositif d'accouplement de la figure 2 est intéressant à utiliser lorsque non seulement les axes 16 et 18 sont susceptibles d'être décalés, mais aussi qu'ils peuvent être non parallèles.

Dans la forme de réalisation des figures 1 et 2, le dispositif d'accouplement 10 est réalisé d'une seule pièce, ce qui signifie que les leviers 20 et 22, ainsi que la charnière souple 28 sont réalisés d'une seule pièce par moulage de la matière plastique. Avantageusement, les axes 16 et 18 sont également réalisés d'une seule pièce avec le dispositif d'accouplement.

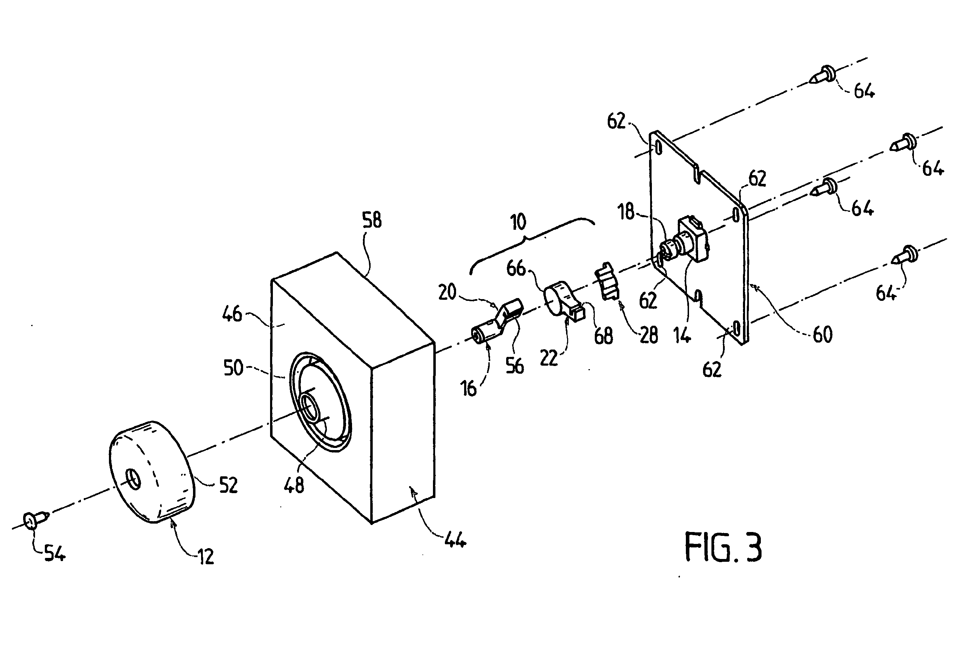

On se réfère maintenant aux figures 3 à 6 qui montrent un exemple d'application de l'invention.

Dans l'exemple, l'organe rotatif menant 12 est un bouton rotatif propre à être centré dans un tableau de commande 44 réalisé sous la forme d'un boîtier propre à être intégré, par exemple, dans une planche de bord d'un véhicule automobile. Le tableau de commande 44 comporte une façade 46 munie d'un fut central 48 pour le passage de l'axe 16. Ce fut est entouré d'une gorge annulaire 50 pour recevoir une jupe 52 que comporte le bouton 12. Ce dernier est assujetti à l'axe 16 par une vis auto-taraudeuse 54.

L'axe 16 est formé d'une seule pièce avec le levier 20 et ce dernier comporte une gorge 56 dans laquelle peut s'encastrer la partie extrême 32 de la charnière souple 28. Cet encastrement peut être réalisé en force et être éventuellement complété par un collage pour assurer un assemblage définitif entre la partie extrême 32 de la charnière souple 28 et le levier 20.

Le tableau de commande 44, en forme de boîtier, définit un conduit de lumière propre à éclairer au moins en partie le bouton de commande 12 et la façade 46, cette dernière étant munie de symboles ou pictogrammes appropriés (non représentés) pour permettre d'identifier la position prise par l'organe rotatif menant 12, qui forme bouton de commande.

Le tableau de commande 44 possède une face postérieure ouverte 58 (figures 4 à 6) dans laquelle vient s'encastrer une carte électronique 60 (figures 3 et 5). Cette carte électronique comporte quatre ouvertures 62 propres à être traversées par quatre vis 64 pour permettre son montage à l'arrière du tableau de commande. La carte 62 porte, dans sa partie centrale, l'organe rotatif mené 14 qui est ici un mécanisme commandé, tel qu'un potentiomètre ou un interrupteur, pouvant être piloté par l'axe 18.

Le levier 22 est rattaché à une bague 66 qui peut être calée sur l'extrémité de l'axe 18 pour réaliser une solidarisation en rotation. Le levier 22 comporte une gorge 68 dans laquelle peut s'encastrer la partie extrême 34 de la charnière souple pour réaliser un assemblage définitif.

La charnière souple 28 de la forme de réalisation des figures 3 à 6 comporte, comme dans le cas de la figure 1, deux régions déformables 36, 38 obtenues par des amincissements localisés ayant la forme de gorges.

Bien entendu, les deux leviers et la charnière souple pourraient être réalisés d'une seule pièce.

Dans une variante, non représentée, il est envisageable aussi de réaliser le dispositif d'accouplement en deux pièces : une première pièce constituée par la charnière souple et l'un des leviers, et une autre pièce constituée par l'autre levier.

Egalement, dans la forme de réalisation des figures 3 à 6, il pourrait être envisagé de réaliser la charnière souple comme dans le cas de la figure 2, avec des régions déformables définissant des liaisons à rotule.

Dans une autre variante, non représentée, le dispositif d'accouplement peut comprendre un commutateur du type à poussée, encore appelé de type "push", combiné à l'organe rotatif mené 14 et propre à être actionné par une poussée axiale exercée sur l'axe 16 de l'organe rotatif menant 12 et transmise par déformation du dispositif d'accouplement.

En effet, la distance axiale entre l'axe 16 et la bague 66 (figure 3) est très faible (quelques dixièmes de millimètres), voire nulle. Le dispositif d'accouplement est suffisamment rigide et élastique pour que, lorsque l'on appuie sur le bouton 12 et donc sur l'axe 16, le dispositif d'accouplement se déforme pour transmettre une force dans la direction axiale et actionner ainsi le commutateur à poussée qui est combiné à l'organe rotatif mené.

Le dispositif de l'invention permet ainsi de réaliser un accouplement entre deux organes rotatifs en rattrapant le décalage éventuel de leurs axes respectifs.

Il offre l'avantage supplémentaire de pouvoir être réalisé avec un minimum de pièces, et même avec une seule pièce.

De plus, ce dispositif fonctionne sans jeu, contrairement aux joints du type Oldham qui comporte deux glissières orthogonales.

En outre, dans le cas où la charnière souple définit deux liaisons à rotules, le dispositif permet le raccordement de deux organes rotatifs dont la distance dans la direction axiale accuse une dispersion plus importante.

L'invention trouve une application particulière aux tableaux de commande utilisés en particulier dans les véhicules automobiles.

## Revendications

1. Dispositif d'accouplement entre un organe rotatif menant et un organe rotatif mené ayant des axes respectifs sensiblement alignés, comprenant un premier levier (20) solidaire de l'axe (16) de l'organe rotatif menant (12) et un second levier (22) solidaire de l'axe (18) de l'organe rotatif mené (14), lesdits premier levier (20) et second levier (22) présentant un décalage angulaire donné (A) et ayant des extrémités respectives (24, 26) éloignées des axes respectifs (16, 18), ainsi qu'une charnière souple (28) reliée aux extrémités (24, 26) des leviers, **caractérisé en ce que** le premier levier (20), le second levier (22) et la charnière souple (28) sont réalisées d'une seule pièce en une matière semi rigide.

2. Dispositif d'accouplement entre un organe rotatif menant et un organe rotatif mené ayant des axes respectifs sensiblement alignés, comprenant un premier levier (20) solidaire de l'axe (16) de l'organe rotatif menant (12) et un second levier (22) solidaire de l'axe (18) de l'organe rotatif mené (14), lesdits premier levier (20) et second levier (22) présentant un décalage angulaire donné (A) et ayant des extrémités respectives (24, 26) éloignées des axes respectifs (16, 18), ainsi qu'une charnière souple (28) reliée aux extrémités (24, 26) des leviers, **caractérisé en ce que** la charnière souple (28) est réalisée d'une seule pièce avec l'un du premier levier (20) ou du second levier (22), tandis que l'autre de ces leviers est réalisé en tant que pièce séparée.

3. Dispositif selon la revendication 1 ou 2, **caractérisé en ce que** la charnière souple (28) comprend une partie centrale (30) reliée à deux parties extrêmes (32, 34) par l'intermédiaire de deux régions déformables (36, 38 ; 40, 42).

4. Dispositif selon la revendication 3, **caractérisé en ce que** les deux régions déformables (36, 38) de la charnière souple (28) sont agencées pour définir deux axes d'articulation (X1, X2) sensiblement parallèles entre eux et aux axes respectifs (16, 18) de l'organe rotatif menant (12) et de l'organe rotatif mené (14).

5. Dispositif selon la revendication 3, **caractérisé en ce que** les deux régions déformables (40, 42) de la charnière souple (28) sont agencées pour définir deux liaisons à rotule.

6. Dispositif selon l'une des revendications 3 à 5, **caractérisé en ce que** la charnière souple (28) est réalisée sous la forme d'une bande de section sensiblement constante, et **en ce que** les deux régions déformables (36, 38 ; 40, 42) sont formées par des amincissements ou étranglements localisés de la bande.

7. Dispositif selon la revendication 6, **caractérisé en ce que** la section de la bande est sensiblement rectangulaire.

8. Dispositif selon l'une des revendications 1 à 7, **caractérisé en ce que** la charnière souple (28) est réalisée par moulage d'une matière plastique semi-rigide.

9. Dispositif selon l'une des revendications 1 à 8, **caractérisé en ce que** le décalage angulaire (A) entre le premier levier et le second levier est inférieur à 90°.

10. Dispositif selon l'une des revendications 1 à 9, **caractérisé en ce qu'**il comprend un commutateur du type à poussée, ou "push", combiné à l'organe rotatif mené (14) et propre à être actionné par une poussée axiale exercée sur l'axe (16) de l'organe rotatif menant (12) et transmise par déformation du dispositif d'accouplement.

11. Dispositif selon l'une des revendications 1 à 10, **caractérisé en ce que** l'organe rotatif menant (12) est un bouton de commande faisant partie d'un tableau de commande (44), tandis que l'organe rotatif mené (14) est un mécanisme faisant partie d'une carte électronique (62) ou d'une platine surmoulée.

## Claims

1. Coupling device between a driving rotating device and a driven rotating device having substantially aligned respective axes, comprising a first lever (20) attached to the shaft (16) of the driving rotating device (12) and a second lever (22) attached to the shaft (18) of the driven rotating device (14), said first lever (20) and second lever (22) having a given angular offset (A) and having respective ends (24, 26) at a distance from the respective shafts (16, 18), along with a flexible hinge (28) connected to the ends (24, 26) of the levers, **characterised in that** the first lever (20), the second lever (22) and the flexible hinge (28) are made of a single piece in a semi-rigid material.

2. Coupling device between a driving rotating device and a driven rotating device having substantially aligned respective axes, comprising a first lever (20) attached to the shaft (16) of the driving rotating device (12) and a second lever (22) attached to the shaft (18) of the driven rotating device (14), said first lever (20) and second lever (22) having a given angular offset (A) and having respective ends (24, 26) at a distance from the respective shafts (16, 18), along with a flexible hinge (28) connected to the ends (24, 26) of the levers, **characterised in that** the flexible hinge (28) is made of a single piece with either the first lever (20) or the second lever (22), while the other lever is made as a separate part.

3. Device according to claim 1 or 2, **characterised in that** the flexible hinge (28) comprises a central section (30) connected to two end sections (32, 34) via two deformable zones (36, 38; 40, 42).

4. Device according to claim 3, **characterised in that** the two deformable zones (36, 38) of the flexible hinge (28) are arranged so as to define two hinge shafts (X1, X2) substantially parallel with each other and with the respective shafts (16, 18) of the driving rotating device (12) and the driven rotating device (14).

5. Device according to claim 3, **characterised in that** the two deformable zones (40, 42) of the flexible hinge (28) are arranged so as to define two ball joints.

6. Device according to one of claims 3 to 5, **characterised in that** the flexible hinge (28) is made in the form of a strip with a substantially constant cross-section, and **in that** the two deformable zones (36, 38; 40, 42) are formed by localised tapered or contracted sections of the strip.

7. Device according to claim 6, **characterised in that** the cross-section of the strip is substantially rectangular.

8. Device according to one of claims 1 to 7, **characterised in that** the flexible hinge (28) is made by moulding a semi-rigid plastic material.

9. Device according to one of claims 1 to 8, **characterised in that** the angular offset (A) between the first lever and the second lever is less than 90°.

10. Device according to one of claims 1 to 9, **characterised in that** it comprises a push-type switch, combined with the driven rotating device (14) and suitable for being actuated by means of an axial thrust applied to the shaft (16) of the driving rotating device (12) and transmitted by means of deformation of the coupling device.

11. Device according to one of claims 1 to 10, **characterised in that** the driving rotating device (12) is a control knob belonging to a control panel (44), while the driven rotating device (14) is a mechanism belonging to an electronic board (62) or a moulded plate.

## Patentansprüche

1. Kupplungsvorrichtung zwischen einem Antriebsdrehteil und einem angetriebenen Drehteil mit entsprechenden, etwa ausgerichteten Achsen, umfassend einen ersten Hebel (20), der fest mit der Achse (16) des Antriebsdrehteils (12) verbunden ist, und einen zweiten Hebel (22), der fest mit der Achse (18) des angetriebenen Drehteils (14) verbunden ist, wobei der besagte erste Hebel (20) und der zweite Hebel (22) eine vorgegebene Winkelverschiebung (A) aufweisen und entsprechende Enden (24, 26) haben, die von den entsprechenden Achsen (16, 18) entfernt sind, sowie ein flexibles Scharnier (28), das mit den Enden (24, 26) der Hebel verbunden ist, **dadurch gekennzeichnet, dass** der erste Hebel (20), der zweite Hebel (22) und das flexible Scharnier (28) aus einem einzigen Stück aus einem halbstarren Werkstoff hergestellt sind.

2. Kupplungsvorrichtung zwischen einem Antriebsdrehteil und einem angetriebenen Drehteil mit entsprechenden, etwa ausgerichteten Achsen, umfassend einen ersten Hebel (20), der fest mit der Achse (16) des Antriebsdrehteils (12) verbunden ist, und einen zweiten Hebel (22), der fest mit der Achse (18) des angetriebenen Drehteils (14) verbunden ist, wobei der besagte erste Hebel (20) und der zweite Hebel (22) eine vorgegebene Winkelverschiebung (A) aufweisen und entsprechende Enden (24, 26) haben, die von den entsprechenden Achsen (16, 18) entfernt sind, sowie ein flexibles Scharnier (28), das mit den Enden (24, 26) der Hebel verbunden ist, **dadurch gekennzeichnet, dass** das flexible Scharnier (28) aus einem einzigen Stück mit einem ersten Hebel (20) oder zweiten Hebel (22), hergestellt ist, wobei der andere dieser Hebel als separates Teil hergestellt ist.

3. Vorrichtung gemäß Anspruch 1 oder 2, **dadurch gekennzeichnet, dass** das flexible Scharnier (28) einen zentralen Teil (30) umfasst, der mit zwei äußeren Teilen (32, 34) über zwei verformbare Bereiche (36, 38; 40, 42) verbunden ist.

4. Vorrichtung gemäß Anspruch 3, **dadurch gekennzeichnet, dass** die zwei verformbaren Bereiche (36, 38) des flexiblen Scharniers (28) angeordnet sind, um zwei Gelenkachsen (X1, X2) zu definieren, die etwa parallel zueinander und zu den entsprechenden Achsen (16, 18) des Antriebsdrehteils (12) und des angetriebenen Drehteils (14) sind.

5. Vorrichtung gemäß Anspruch 3, **dadurch gekennzeichnet, dass** die zwei verformbaren Bereiche (40, 42) des flexiblen Scharniers (28) angeordnet sind, um zwei Kugelgelenkverbindungen zu definieren.

6. Vorrichtung gemäß einem der Ansprüche 3 bis 5, **dadurch gekennzeichnet, dass** das flexible Scharnier (28) in Form eines Bandes mit etwa konstantem Querschnitt hergestellt ist und **dadurch**, dass die zwei verformbaren Bereiche (36, 38; 40, 42) von örtlich begrenzten Verjüngungen oder Querschnittsverminderungen des Bandes gebildet werden.

7. Vorrichtung gemäß Anspruch 6, **dadurch gekennzeichnet, dass** der Querschnitt des Bandes etwa rechteckig ist.

8. Vorrichtung gemäß einem der Ansprüche 1 bis 7, **dadurch gekennzeichnet, dass** das elastische Scharnier (28) durch Formen eines halbstarren Kunststoffmaterials hergestellt ist.

9. Vorrichtung gemäß einem der Ansprüche 1 bis 8, **dadurch gekennzeichnet, dass** die Winkelverschiebung (A) zwischen dem ersten Hebel und dem zweiten Hebel kleiner als 90° ist.

10. Vorrichtung gemäß einem der Ansprüche 1 bis 9, **dadurch gekennzeichnet, dass** sie einen Schalter vom Typ Druckschalter oder "Push" umfasst, der mit dem angetriebenen Drehteil (14) kombiniert ist und durch einen axialen Druck betätigt wird, der auf die Achse (16) des Antriebsdrehteils (12) ausgeübt und durch Verformung der Kupplungsvorrichtung übertragen wird.

11. Vorrichtung gemäß einem der Ansprüche 1 bis 10, **dadurch gekennzeichnet, dass** das Antriebdrehteil (12) ein Bedienungsknopf ist, der zu einem Bedienfeld (44) gehört, während das angetriebene Drehteil (14) ein Mechanismus ist, der zu einer Magnetkarte (62) oder einer nach dem Gussstück geformten Platine gehört.
